# EUROPEAN PATENT APPLICATION

(11) **EP 4 848 515 A1**
(43) Date of publication of application: **02.12.2026**
(21) Application number: 24925362.6
(22) Date of filing: 22.03.2024
(51) Int. Cl.: H02J 3/32, H02J 7/00, H02J 3/38

(54) **POWER DISTRIBUTION METHOD AND APPARATUS, ENERGY STORAGE POWER STATION, AND STORAGE MEDIUM**

(30) Priority: 20.02.2024 CN 202410190336
(71) Applicant: Eve Energy Co., Ltd., Huizhou, Guangdong 516006 (CN)
(72) Inventor: LONG, Qinghao, Wuhan, Hubei 430000 (CN); PAN, Zhenxing, Wuhan, Hubei 430000 (CN); YI, Haohao, Wuhan, Hubei 430000 (CN)
(74) Representative: Zhu, Puxing
(86) International application number: PCT/CN2024/083166
(87) International publication number: WO 2025/175616

(57) **Abstract**

The present application relates to a power distribution method, a power distribution device, an energy storage system, and a storage medium. The method includes: obtaining total power of an energy storage system and current demand power of a plurality of grid-connected systems; obtaining dispatching power for each corresponding one of the grid-connected systems according to the total power and each of the current demand power; detecting operation parameter data of each of the grid-connected systems, and processing each of the dispatching power according to each of the operation parameter data, so as to obtain each optimized dispatching power; and, performing charging and discharging on corresponding one of the grid-connected systems based on each of the optimized dispatching power.

## Description

The present application claims priority to and the benefit of Chinese Patent Application No. 2024101903362, filed on February 20, 2024, the disclosures of which is incorporated herein by reference in its entirety.

### TECHNICAL FIELD

The present application relates to the field of energy storage technologies, and in particular, to a power distribution method, a power distribution device, an energy storage power station, and a storage medium.

### BACKGROUND

An Energy Management System (EMS) is a decision-making core device of an electrochemical energy storage power station; in an energy storage system, the EMS may be used for distributing power to all grid-connected systems of a station.

In related technologies, situations of unbalanced power distribution and unbalanced charging and discharging among batteries are present; for example, directly distributing power evenly to each grid-connected system for performing charging and discharging easily causes problems of overcharging or over-discharging of the batteries, reducing the operation stability of the energy storage system and increasing the operation cost.

### SUMMARY

### TECHNICAL ISSUES

The present application provides a power distribution method, a power distribution device, an energy storage power station, and a storage medium, which are capable of achieving balanced power distribution and balanced battery usage, avoiding overcharging or over-discharging of batteries, ensuring stable operation of the energy storage power station, and reducing costs.

### TECHNICAL SOLUTIONS

In a first aspect, embodiments of the present application provide a power distribution method, including the following steps:
obtaining total power of an energy storage system and current demand power of a plurality of grid-connected systems;
obtaining dispatching power for each corresponding one of the grid-connected systems according to the total power and each of the current demand power;
detecting operation parameter data of each of the grid-connected systems, and processing each of the dispatching power according to each of the operation parameter data, so as to obtain each optimized dispatching power; and
performing charging and discharging on corresponding one of the grid-connected systems based on each of the optimized dispatching power.

In a second aspect, the present application provides a power distribution device, including:
a power obtaining unit, configured to obtain total power of an energy storage system and current demand power of a plurality of grid-connected systems;
a power distribution unit, configured to obtain dispatching power for each corresponding one of the grid-connected systems according to the total power and each of the current demand power;
a power optimization unit, configured to detect operation parameter data of each of the grid-connected systems, and processing each of the dispatching power according to each of the operation parameter data, so as to obtain each optimized dispatching power; and
a power dispatching unit, configured to perform charging and discharging on corresponding one of the grid-connected systems based on each of the optimized dispatching power.

In a third aspect, the present application provides an energy storage power station, including an energy storage system and a plurality of grid-connected systems, where the energy storage system is provided with an energy management system, the energy management system is respectively connected with each of the grid-connected systems, and the energy management system is configured to execute the steps of any of the power distribution methods described above.

In a fourth aspect, the present application provides a computer-readable storage medium, stored with a computer program, where the computer program, when executed by a processor, is configured to implement the steps of any of the power distribution methods described above.

### BENEFICIAL EFFECT

The beneficial effects of the present application are as follows: in the above-mentioned power distribution method, by obtaining total power of an energy storage system and current demand power of a plurality of grid-connected systems; obtaining dispatching power for each corresponding one of the grid-connected systems according to the total power and each of the current demand power; detecting operation parameter data of each of the grid-connected systems, and processing each of the dispatching power according to each of the operation parameter data, so as to obtain each optimized dispatching power; and, performing charging and discharging on corresponding one of the grid-connected systems based on each of the optimized dispatching power, balanced power distribution among the various grid-connected systems is achieved. The present application distributes the dispatching power according to the current demand power of each grid-connected system; after distributing the dispatching power for each grid-connected system, the operation parameter data of each grid-connected system is detected to adjust the dispatching power, so as to achieve optimization of the dispatching power. Thus, charging and discharging are performed on the corresponding grid-connected system based on the optimized dispatching power, realizing balanced power distribution and balanced battery usage, avoiding overcharging or over-discharging of batteries in the energy storage system, ensuring stable operation of the energy storage power station, and reducing costs.

### BRIEF DESCRIPTION OF THE DRAWINGS

FIG. 1 is a schematic diagram of an application scenario of a power distribution method in embodiments of the present application;
FIG. 2 is a first schematic flow diagram of the power distribution method in embodiments of the present application;
FIG. 3 is a schematic flow diagram of a temperature data processing step in embodiments of the present application;
FIG. 4 is a schematic flow diagram of a voltage data processing step in embodiments of the present application;
FIG. 5 is a schematic flow diagram of an SOC data processing step in embodiments of the present application;
FIG. 6 is a schematic flow diagram of a dispatching power processing step in embodiments of the present application;
FIG. 7 is a block diagram of a power distribution device in embodiments of the present application;
FIG. 8 is a schematic structural diagram of an energy storage power station in embodiments of the present application.

### DETAILED DESCRIPTION

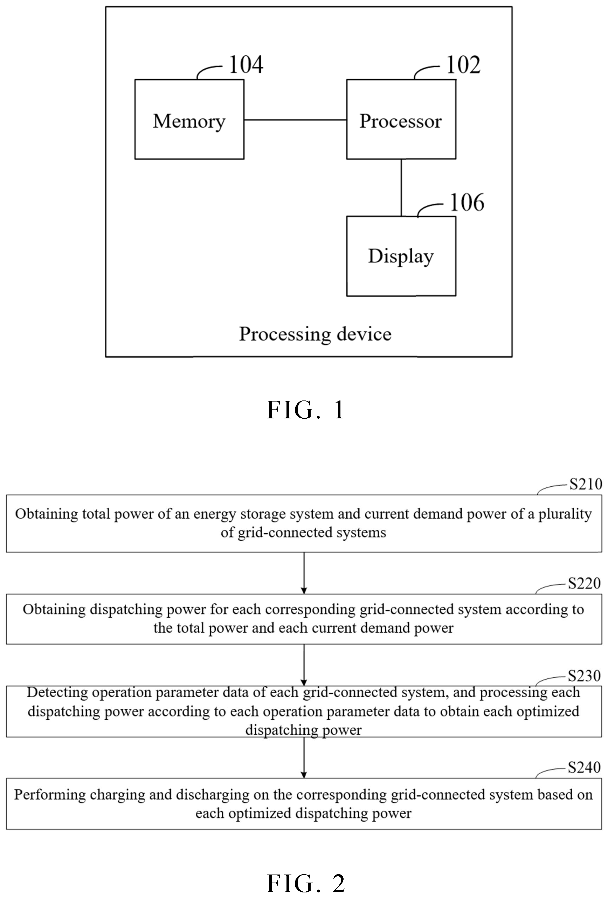

The power distribution method provided by the present application can be applied to the application environment as shown in FIG. 1. The processing device may include a processor 102 and a memory 104, where the memory 104 may be configured to store data such as total power, current demand power, operation parameter data, and optimized dispatching power. The processor 102 may be configured to obtain total power of an energy storage system and current demand power of a plurality of grid-connected systems; to obtain dispatching power for each corresponding one of the grid-connected systems according to the total power and each of the current demand power; to detect operation parameter data of each of the grid-connected systems, and to process each of the dispatching power according to each of the operation parameter data, so as to obtain each optimized dispatching power; and, to perform charging and discharging on corresponding one of the grid-connected systems based on each of the optimized dispatching power. The processing device may further include a display 106, and the display 106 may display data such as total power, current demand power, operation parameter data, and optimized dispatching power through a graphical interface.

Exemplarily, the processing device may be an energy management system, the processing device may be disposed in an energy storage system, the energy storage system and each grid-connected system form an energy storage power station, and the energy management system is respectively connected with each grid-connected system. In another example, the energy storage power station further includes an energy storage converter (PCS), where a first side end of the energy storage converter is connected to the energy storage system, and a second side end of the energy storage converter is respectively connected to each grid-connected system.

In an embodiment, as shown in FIG. 2, a power distribution method is provided. Taking the application of the method to the processor 102 in FIG. 1 as an example for description, the method includes the following steps:
step S210: obtaining total power of an energy storage system and current demand power of a plurality of grid-connected systems.

The total power of the energy storage system may be total charging power or total discharging power; correspondingly, the current demand power of the grid-connected system may be current demand charging power or current demand discharging power.

Exemplarily, when a power distribution request is received, the total power of the energy storage system is queried according to the power distribution request, so as to obtain the total power of the energy storage system; in addition, a power requirement instruction may be transmitted to each grid-connected system according to the power distribution request, so that each grid-connected system feeds back corresponding current demand power according to the requirement instruction, and thus the current demand power of each grid-connected system is obtained.

Step S220: obtaining dispatching power for each corresponding grid-connected system according to the total power and each current demand power.

The dispatching power may be dispatching charging power or dispatching discharging power.

The total power and each current demand power are processed according to the obtained total power and each current demand power, so as to obtain the dispatching power for each corresponding grid-connected system.

Step S230: detecting operation parameter data of each grid-connected system, and processing each dispatching power according to each operation parameter data to obtain each optimized dispatching power.

The operation parameters may include, but are not limited to, electrical parameters and environmental characteristic parameters.

For example, several sensing modules may be provided, the operation parameters of the corresponding grid-connected system are detected in real time through the sensing modules, and the detected operation parameter data is transmitted to the processor, so that the processor obtains the operation parameter data of each corresponding grid-connected system.

The processor may perform optimization processing on each dispatching power according to the obtained operation parameter data; for example, critical values may be set for the corresponding operation parameters, each operation parameter data is compared with the corresponding critical value, and each dispatching power is optimally adjusted according to the result of the comparison processing, so as to obtain the optimized dispatching power for each corresponding grid-connected system.

Step S240: performing charging and discharging on the corresponding grid-connected system based on each optimized dispatching power.

For example, each optimized dispatching power is transmitted to the energy storage converter, and charging and discharging are performed on each grid-connected system respectively through the energy storage converter, so that the grid-connected system performs charging and discharging according to the corresponding optimized dispatching power.

In the above embodiment, balanced power distribution among the various grid-connected systems is achieved by obtaining total power of the energy storage system and current demand power of the plurality of grid-connected systems; obtaining dispatching power for each corresponding grid-connected system according to the total power and each current demand power; detecting operation parameters of each grid-connected system to obtain operation parameter data of each corresponding grid-connected system; processing each dispatching power according to each operation parameter data to obtain each optimized dispatching power; and performing charging and discharging on each grid-connected system corresponding to the optimized dispatching power based on each optimized dispatching power. The present application distributes the dispatching power according to the current demand power of each grid-connected system; after distributing the dispatching power for each grid-connected system, the operation parameter data of each grid-connected system is detected to adjust the dispatching power, so as to achieve optimization of the dispatching power. Thus, charging and discharging are performed on the corresponding grid-connected system based on the optimized dispatching power, realizing balanced power distribution and balanced battery usage, avoiding overcharging or over-discharging of batteries in the energy storage system, ensuring stable operation of the energy storage power station, and reducing costs.

In an example, before the step of obtaining the dispatching power for each corresponding grid-connected system according to the total power and each current demand power, the method includes:
obtaining total required power according to each current demand power; and obtaining a power requirement ratio of each grid-connected system according to each current demand power and the total required power.

For example, the grid-connected system may include a battery management system (BMS); a power requirement instruction is transmitted to the BMS of each grid-connected system, so that the BMS of each grid-connected system feeds back corresponding current demand power according to the requirement instruction, and thus the current demand power of each grid-connected system is obtained; total required power is obtained by performing accumulation processing on each current demand power; and the power requirement ratio of the corresponding grid-connected system is obtained by dividing the current demand power by the total required power. It should be noted that the current demand power may be the maximum required power that the corresponding grid-connected system is capable of charging or discharging currently.

In an example, the step of obtaining the dispatching power for each corresponding grid-connected system according to the total power and each current demand power includes:
obtaining the dispatching power for each corresponding grid-connected system according to the total power and each power requirement ratio.

The dispatching power for each corresponding grid-connected system is obtained by multiplying the power requirement ratio of each grid-connected system by the total power respectively. Further, after distributing the dispatching power for each grid-connected system, the operation parameter data of each grid-connected system is detected to adjust the dispatching power, so as to achieve optimization of the dispatching power. Thus, charging and discharging are performed on the corresponding grid-connected system based on the optimized dispatching power, realizing balanced power distribution and balanced battery usage, avoiding overcharging or over-discharging of batteries in the energy storage system, ensuring stable operation of the energy storage power station, and reducing costs.

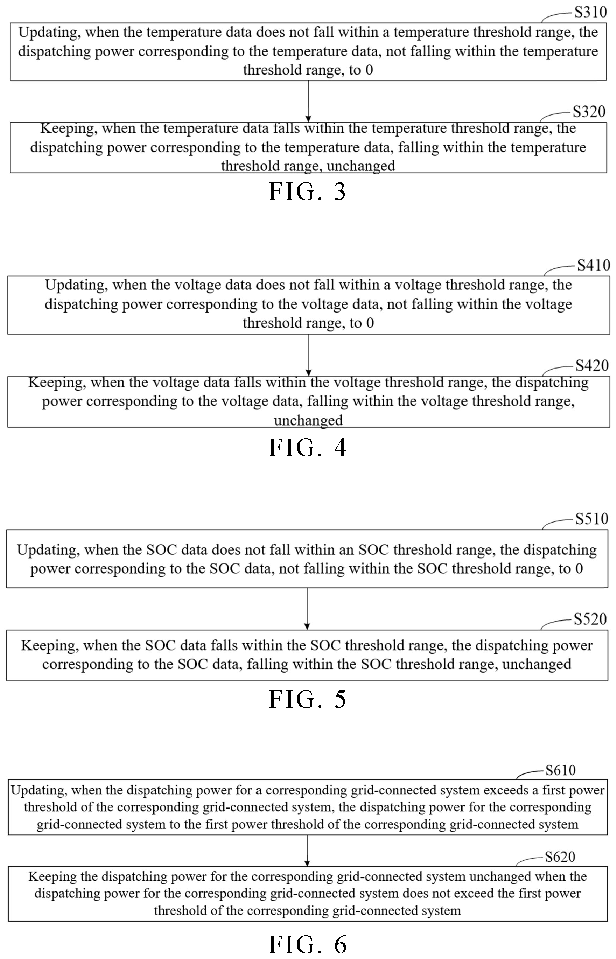

In an embodiment, the operation parameter data includes temperature data; as shown in FIG. 3, the step of processing each dispatching power according to each operation parameter data to obtain each optimized dispatching power includes:
step S310: updating, when the temperature data does not fall within a temperature threshold range, the dispatching power corresponding to the temperature data, not falling within the temperature threshold range, to 0.

For example, the temperature of the corresponding grid-connected system may be detected through a temperature sensor, so as to obtain the temperature data of the corresponding grid-connected system.

The temperature data of each grid-connected system is compared with the temperature threshold range; when the temperature data does not fall within the temperature threshold range, the corresponding grid-connected system is determined to be in an over-temperature or under-temperature state, and then the dispatching power corresponding to the temperature data not falling within the temperature threshold range is updated to 0, that is, no power is dispatched to the grid-connected system with temperature data not falling within the temperature threshold range, thereby improving the safety and reliability of power distribution.

Step S320: keeping, when the temperature data falls within the temperature threshold range, the dispatching power corresponding to the temperature data, falling within the temperature threshold range, unchanged.

The temperature data of each grid-connected system is compared with the temperature threshold range; when the temperature data falls within the temperature threshold range, the temperature of the corresponding grid-connected system is determined to be in a safe state, and then the dispatching power corresponding to the temperature data falling within the temperature threshold range is kept unchanged, thereby realizing optimization of the dispatching power for each grid-connected system. Further, charging and discharging are performed on the corresponding grid-connected system based on the optimized dispatching power, realizing balanced power distribution and balanced battery usage, avoiding overcharging or over-discharging of batteries in the energy storage system, ensuring stable operation of the energy storage power station, and reducing costs.

In the above embodiments, flexible power distribution is performed on each grid-connected system, so that the energy management system has a higher level of intelligence; meanwhile, on the premise of not affecting the hardware performance of the energy management system, the computing capability of the energy management system is improved to ensure stable operation of the energy storage system and reduce operation costs.

In an embodiment, the operation parameter data further includes voltage data; as shown in FIG. 4, the step of processing each dispatching power according to each operation parameter data to obtain each optimized dispatching power includes:
step S410: updating, when the voltage data does not fall within a voltage threshold range, the dispatching power corresponding to the voltage data, not falling within the voltage threshold range, to 0.

For example, the voltage of the corresponding grid-connected system may be detected through a voltage sensor, so as to obtain the voltage data of the corresponding grid-connected system.

The voltage data of each grid-connected system is compared with the voltage threshold range; when the voltage data does not fall within the voltage threshold range, the corresponding grid-connected system is determined to be in an over-voltage or under-voltage state, and then the dispatching power corresponding to the voltage data not falling within the voltage threshold range is updated to 0, that is, no power is dispatched to the grid-connected system with voltage data not falling within the voltage threshold range, thereby further improving the safety and reliability of power distribution.

Step S420: keeping, when the voltage data falls within the voltage threshold range, the dispatching power corresponding to the voltage data, falling within the voltage threshold range, unchanged.

The voltage data of each grid-connected system is compared with the voltage threshold range; when the voltage data falls within the voltage threshold range, the voltage of the corresponding grid-connected system is determined to be in a safe state, and then the dispatching power corresponding to the voltage data falling within the voltage threshold range is kept unchanged, thereby realizing optimization of the dispatching power for each grid-connected system. Further, charging and discharging are performed on the corresponding grid-connected system based on the optimized dispatching power, realizing balanced power distribution and balanced battery usage, avoiding overcharging or over-discharging of batteries in the energy storage system, ensuring stable operation of the energy storage power station, and reducing costs.

In an embodiment, the operation parameter data further includes SOC (State Of Charge) data; as shown in FIG. 5, the step of processing each dispatching power according to each operation parameter data to obtain each optimized dispatching power includes:
step S510: updating, when the SOC data does not fall within an SOC threshold range, the dispatching power corresponding to the SOC data, not falling within the SOC threshold range, to 0.

For example, the SOC of the corresponding grid-connected system may be detected through the BMS, so as to obtain the SOC data of the corresponding grid-connected system.

The SOC data of each grid-connected system is compared with the SOC threshold range (e.g., set to 5%-95%); when the SOC data does not fall within the SOC threshold range, the corresponding grid-connected system is determined to be in a unstable battery state, and then the dispatching power corresponding to the SOC data not falling within the SOC threshold range is updated to 0, that is, no power is dispatched to the grid-connected system with SOC data not falling within the SOC threshold range, thereby further improving the safety and reliability of power distribution.

Step S520: keeping, when the SOC data falls within the SOC threshold range, the dispatching power corresponding to the SOC data, falling within the SOC threshold range, unchanged.

The SOC data of each grid-connected system is compared with the SOC threshold range; when the SOC data falls within the SOC threshold range, the SOC of the corresponding grid-connected system is determined to be in a stable state, and then the dispatching power corresponding to the SOC data falling within the SOC threshold range is kept unchanged, thereby realizing optimization of the dispatching power for each grid-connected system. Further, charging and discharging are performed on the corresponding grid-connected system based on the optimized dispatching power, realizing balanced power distribution and balanced battery usage, avoiding overcharging or over-discharging of batteries in the energy storage system, ensuring stable operation of the energy storage power station, and reducing costs.

In an embodiment, as shown in FIG. 6, after the step of processing each dispatching power according to each operation parameter data to obtain each optimized dispatching power, the method includes:
step S610: updating, when the dispatching power for a corresponding grid-connected system exceeds a first power threshold of the corresponding grid-connected system, the dispatching power for the corresponding grid-connected system to the first power threshold of the corresponding grid-connected system.

The dispatching power for each grid-connected system is compared with the corresponding first power threshold; when the dispatching power exceeds the first power threshold, the charging power and/or discharging power of the corresponding grid-connected system is determined to be too high, and then the dispatching power for the corresponding grid-connected system is updated to the corresponding first power threshold, so as to realize optimal adjustment of the dispatching power for the corresponding grid-connected system.

Step S620: keeping the dispatching power for the corresponding grid-connected system unchanged when the dispatching power for the corresponding grid-connected system does not exceed the first power threshold of the corresponding grid-connected system.

The dispatching power for each grid-connected system is compared with the first power threshold; when the dispatching power does not exceed the first power threshold, the charging power and/or discharging power of the corresponding grid-connected system is determined to be within a suitable range, and then the dispatching power for the corresponding grid-connected system is kept unchanged, thereby realizing optimization of the dispatching power for each grid-connected system. Further, charging and discharging are performed on the corresponding grid-connected system based on the optimized dispatching power, realizing balanced power distribution and balanced battery usage, avoiding overcharging or over-discharging of batteries in the energy storage system, ensuring stable operation of the energy storage power station, and reducing costs.

In the above embodiment, the dispatching power is distributed according to the required power of the BMS of each grid-connected system; after distributing the dispatching power for each grid-connected system, the dispatching power is not immediately transmitted to the PCS. Instead, the operation parameter status of each grid-connected system is first detected to optimally adjust the power, and the optimized dispatching power is sent to the PCS. Charging and discharging of the corresponding grid-connected system are performed through the PCS, realizing balanced power distribution and balanced battery usage. It should be noted that the execution time for completing the optimal power distribution is stably within 200 ms, achieving extreme response. By performing flexible power distribution on each grid-connected system, the EMS can better manage and dispatch distributed energy sources (such as photovoltaics, energy storage, and charging piles), realizing optimized utilization of energy sources and reduction of energy costs.

In an embodiment, the operation parameter data further includes current actual power; after the step of detecting the operation parameter data of each grid-connected system, the method includes:
updating, when the current actual power exceeds a second power threshold, the dispatching power corresponding to the current actual power, exceeding the second power threshold, to 0.

For example, the power of the corresponding grid-connected system may be detected in real time through the BMS, so as to obtain the current actual power of the corresponding grid-connected system.

The current actual power of each grid-connected system is compared with the second power threshold; when the current actual power exceeds the second power threshold, the current actual power of the corresponding grid-connected system is determined to be beyond the safe range, and then the dispatching power corresponding to the current actual power exceeding the second power threshold is updated to 0, that is, no power is dispatched to the grid-connected system with current actual power exceeding the second power threshold, thereby further improving the safety and reliability of power distribution.

It should be understood that although the steps in the flowcharts of FIG. 2 to FIG. 6 are sequentially displayed according to the instructions of the arrows, these steps are not necessarily executed sequentially in the order indicated by the arrows. Unless explicitly stated in this document, the execution of these steps has no strict order limit, and these steps can be executed in other orders. Moreover, at least part of the steps in FIG. 2 to FIG. 6 may include multiple sub-steps or multiple stages. These sub-steps or stages are not necessarily executed at the same time, but can be executed at different times. The execution order of these sub-steps or stages is not necessarily sequential, but can be executed alternately or in rotation with at least part of the sub-steps or stages of other steps or other steps.

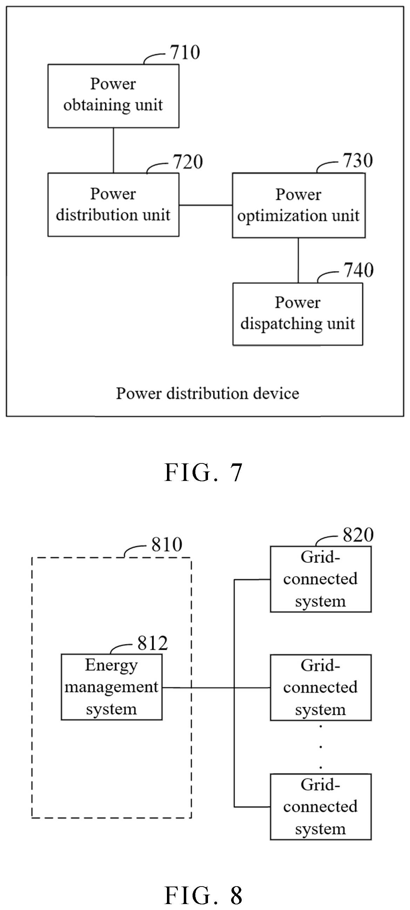

In an embodiment, as shown in FIG. 7, a power distribution device is provided, including:
a power obtaining unit 710, configured to obtain total power of an energy storage system and current demand power of a plurality of grid-connected systems;
a power distribution unit 720, configured to obtain dispatching power for each corresponding one of the grid-connected systems according to the total power and each of the current demand power;
a power optimization unit 730, configured to detect operation parameter data of each of the grid-connected systems, and processing each of the dispatching power according to each of the operation parameter data, so as to obtain each optimized dispatching power; and
a power dispatching unit 740, configured to perform charging and discharging on corresponding one of the grid-connected systems based on each of the optimized dispatching power.

For specific limitations on the power distribution device, reference can be made to the limitations on the power distribution method above, which will not be repeated here. All or part of each module in the above power distribution device can be implemented through software, hardware, and combinations thereof. Each of the above modules can be embedded in or independent of the processor in the energy management system in the form of hardware, or stored in the memory in the energy management system in the form of software, so that the processor can call and execute the operations corresponding to the above modules.

In an embodiment, as shown in FIG. 8, an energy storage power station is further provided, including an energy storage system 810 and a plurality of grid-connected systems 820. The energy storage system 810 is provided with an energy management system 812, the energy management system 812 is respectively connected with each grid-connected system 820, and the energy management system is configured to execute the steps of any of the power distribution methods described above.

For example, the energy storage power station further includes an energy storage converter, connected between the energy storage system 810 and each grid-connected system 820. The energy storage system 810 can discharge to each grid-connected system 820 through the energy storage converter, and each grid-connected system 820 can also charge the energy storage system 810 through the energy storage converter. The grid-connected system 820 may include a battery management system (BMS), and the energy management system 812 is respectively connected with the BMS of each grid-connected system 820.

The energy management system 812 obtains the total power of the energy storage system 810 and the current demand power of each grid-connected system 820; obtains the dispatching power for each corresponding grid-connected system 820 according to the total power and each current demand power; detects the operation parameters of each grid-connected system 820 to obtain the operation parameter data of each corresponding grid-connected system 820; processes each dispatching power according to each operation parameter data to obtain each optimized dispatching power; and performs charging and discharging on each grid-connected system 820 corresponding to the optimized dispatching power based on each optimized dispatching power, thereby realizing balanced power distribution among the various grid-connected systems 820. The present application distributes the dispatching power according to the current demand power of each grid-connected system 820; after distributing the dispatching power for each grid-connected system 820, the operation parameter data of each grid-connected system 820 is detected to adjust the dispatching power, so as to achieve optimization of the dispatching power. Thus, charging and discharging are performed on the corresponding grid-connected system 820 based on the optimized dispatching power, realizing balanced power distribution and balanced battery usage, avoiding overcharging or over-discharging of batteries in the energy storage system 810, ensuring stable operation of the energy storage power station, and reducing costs.

In the above embodiment, by performing flexible power distribution on each grid-connected system 820, the charging and discharging status of the energy storage system 810 can be accurately adjusted according to real-time detection data and prediction information to achieve optimal power distribution, thereby solving the problem of unbalanced power distribution of the traditional energy management system 812 and avoiding overcharging or over-discharging of batteries; solving the problem of unbalanced charging and discharging between battery clusters, making battery usage more balanced; achieving more flexible and reasonable power distribution, which can independently control the charging and discharging of battery clusters in a single energy storage system 810 without mutual interference; through flexible power distribution, the energy storage system 810 can optimize the use and distribution of energy, store energy during low-demand periods, and release energy during high-demand periods, thereby avoiding energy waste and improving energy utilization efficiency; in addition, the energy storage system 810 can absorb excess energy during grid peak periods to reduce grid load, and release stored energy when needed to meet peak demand, which helps reduce dependence on traditional power generation equipment and lower the operation cost of the grid.

In an embodiment, the present application provides a computer-readable storage medium, stored with a computer program, where the computer program, when executed by a processor, is configured to implement the steps of any of the power distribution methods described above. The computer-readable storage medium may be non-volatile or volatile.

For example, when the computer program is executed by the processor, the following steps of the power distribution method are implemented:
obtaining total power of an energy storage system and current demand power of a plurality of grid-connected systems; obtaining dispatching power for each corresponding one of the grid-connected systems according to the total power and each of the current demand power; detecting operation parameter data of each of the grid-connected systems, and processing each of the dispatching power according to each of the operation parameter data, so as to obtain each optimized dispatching power; and performing charging and discharging on each grid-connected system corresponding to the optimized dispatching power based on each optimized dispatching power, thereby realizing balanced power distribution among the various grid-connected systems.

A person of ordinary skill in the art can understand that all or part of the processes in the methods of the above embodiments can be implemented by instructing relevant hardware through a computer program. The computer program can be stored in a non-volatile computer-readable storage medium. When the computer program is executed, it can include the processes of the embodiments of the division operation methods described above. Any reference to a memory, storage, database, or other medium used in the various embodiments provided in this application may include non-volatile and/or volatile memory. Non-volatile memory may include read-only memory (ROM), programmable ROM (PROM), electrically programmable ROM (EPROM), electrically erasable programmable ROM (EEPROM), or flash memory. Volatile memory may include random access memory (RAM) or external cache memory. By way of illustration and not limitation, RAM is available in various forms, such as static RAM (SRAM), dynamic RAM (DRAM), synchronous DRAM (SDRAM), double data rate SDRAM (DDR SDRAM), enhanced SDRAM (ESDRAM), synchronous link DRAM (SLDRAM), memory bus (Rambus) direct RAM (RDRAM), direct memory bus dynamic RAM (DRDRAM), and memory bus dynamic RAM (RDRAM).

## Claims

1. A power distribution method, comprising the following steps:
obtaining total power of an energy storage system and current demand power of a plurality of grid-connected systems;
obtaining dispatching power for each corresponding one of the grid-connected systems according to the total power and each of the current demand power;
detecting operation parameter data of each of the grid-connected systems, and processing each of the dispatching power according to each of the operation parameter data, so as to obtain each optimized dispatching power; and
performing charging and discharging on corresponding one of the grid-connected systems based on each of the optimized dispatching power.

2. The power distribution method according to claim 1, wherein, before the step of obtaining the dispatching power for each corresponding one of the grid-connected systems according to the total power and each of the current demand power, the method further comprises:
obtaining total required power according to each of the current demand power; and
obtaining a power requirement ratio for each of the grid-connected systems according to each of the current demand power and the total required power;
wherein the step of obtaining the dispatching power for each corresponding one of the grid-connected systems according to the total power and each of the current demand power comprises:
obtaining the dispatching power for each corresponding one of the grid-connected systems according to the total power and each power requirement ratio.

3. The power distribution method according to claim 1, wherein the operation parameter data comprises temperature data;
wherein the step of processing each of the dispatching power according to each of the operation parameter data to obtain each optimized dispatching power comprises:
updating, when the temperature data does not fall within a temperature threshold range, the dispatching power corresponding to the temperature data, not falling within the temperature threshold range, to 0; and
keeping, when the temperature data falls within the temperature threshold range, the dispatching power corresponding to the temperature data, falling within the temperature threshold range, unchanged.

4. The power distribution method according to claim 3, wherein the operation parameter data further comprises voltage data;
wherein the step of processing each of the dispatching power according to each of the operation parameter data to obtain each optimized dispatching power comprises:
updating, when the voltage data does not fall within a voltage threshold range, the dispatching power corresponding to the voltage data, not falling within the voltage threshold range, to 0; and
keeping, when the voltage data falls within the voltage threshold range, the dispatching power corresponding to the voltage data, falling within the voltage threshold range, unchanged.

5. The power distribution method according to claim 4, wherein the operation parameter data further comprises SOC data;
wherein the step of processing each of the dispatching power according to each of the operation parameter data to obtain each optimized dispatching power comprises:
updating, when the SOC data does not fall within an SOC threshold range, the dispatching power corresponding to the SOC data, not falling within the SOC threshold range, to 0; and
keeping, when the SOC data falls within the SOC threshold range, the dispatching power corresponding to the SOC data, falling within the SOC threshold range, unchanged.

6. The power distribution method according to any of claim 3 to claim 5, wherein, after the step of processing each of the dispatching power according to each of the operation parameter data to obtain each optimized dispatching power, the method further comprises:
updating, when the dispatching power for corresponding one of the grid-connected systems exceeds a first power threshold of a corresponding grid-connected system, the dispatching power for corresponding one of the grid-connected systems to the first power threshold of the corresponding grid-connected system; and
keeping, when the dispatching power for corresponding one of the grid-connected systems does not exceed the first power threshold of the corresponding grid-connected system, the dispatching power for corresponding one of the grid-connected systems unchanged.

7. The power distribution method according to claim 6, wherein the operation parameter data further comprises current actual power; wherein after the step of detecting the operation parameter data of each of the grid-connected systems, the method further comprises:
updating, when the current actual power exceeds a second power threshold, the dispatching power corresponding to the current actual power and exceeding the second power threshold to 0.

8. A power distribution device, comprising:
a power obtaining unit, configured to obtain total power of an energy storage system and current demand power of a plurality of grid-connected systems;
a power distribution unit, configured to obtain dispatching power for each corresponding one of the grid-connected systems according to the total power and each of the current demand power;
a power optimization unit, configured to detect operation parameter data of each of the grid-connected systems, and processing each of the dispatching power according to each of the operation parameter data, so as to obtain each optimized dispatching power; and
a power dispatching unit, configured to perform charging and discharging on corresponding one of the grid-connected systems based on each of the optimized dispatching power.

9. An energy storage power station, comprising an energy storage system and a plurality of grid-connected systems, wherein the energy storage system is provided with an energy management system, the energy management system is respectively connected with each of the grid-connected systems, and the energy management system is configured to execute the steps of the power distribution method according to any of claim 1 to claim 7.

10. A computer-readable storage medium, stored with a computer program, wherein the computer program, when executed by a processor, is configured to implement the steps of the power distribution method according to any of claim 1 to claim 7.
